# EUROPÄISCHE PATENTSCHRIFT

(11) **EP 0 822 271 B1**
(45) Veröffentlichungstag und Bekanntmachung des Hinweises auf die Patenterteilung: **27.11.2002**
(21) Anmeldenummer: 97113169.3
(22) Anmeldetag: 31.07.1997
(51) Int. Cl.: C25B 1/28, C02F 1/78, C02F 1/461

(54) **Elektrolysezelle, insbesondere zur Erzeugung von Ozon für die Abwasserbehandlung sowie dessen Verwendung**
Electrolytic cell in particular for ozone generation for application in waste water treatment
Cellule d'électrolyse en particulier pour la génération de l'ozone pour le traitement des eaux usées et son utilisation

(30) Priorität: 01.08.1996 DE 29613308 U
(43) Veröffentlichungstag der Anmeldung: 04.02.1998
(73) Patentinhaber: AXO Group AG, 19322 Wittenberge (DE)
(72) Erfinder: Fischer, W. Günther, Dipl.-Ing., 53340 Meckenheim (DE)
(74) Vertreter: Koch, Theodor, Dipl.-Phys.

(56) Entgegenhaltungen:
- DE-A- 4 227 732
- DE-U- 29 504 323
- US-A- 4 326 930

## Beschreibung

Die vorliegende Erfindung bezieht sich auf eine Elektrolysezelle nach dem Oberbegriff des Anspruchs 1 sowie auf deren Verwendung.

Elektrolysezellen, deren Ionenaustauschermembran mit aus einem porösen Material bestehenden oder damit beschichteten Elektroden versehen sind, erlauben einen Zellenbetrieb bei hohen Stromdichten und damit mit hohen Umsätzen. Die Ionenaustauschermembran übernimmt dabei als Feststoffelektrolytmembran gleichzeitig die Funktion des Separators von Anoden- und Kathodenraum und des Elektrolyten. Zellen dieser Bauweise sind seit längerer Zeit bekannt, wobei hydratisierte, perfluorierte Kationenaustauschermembrane verwendet werden, welche eine elektrochemische Stabilität gegenüber der reduzierenden bzw. oxidierenden Wirkung der Elektroden aufweisen (Stucki: "Reaktion- und Prozesstechnik der Membrel-Wasserelektrolyse", Dechema Monographien Verlag Chemie 94 (1983) 211).

Der Betrieb solcher Zellen ist grundsätzlich in Medien mit geringem Leitwert, wie z.B. chemisch reinem Wasser, möglich. Die elektrochemischen Reaktionen an den Elektroden führen beim Betrieb in Reinstwasser zu Wasserstoff und Sauerstoff; bei Verwendung besonderer Anodenmaterialien kann dabei auch an Stelle von reinem Sauerstoff ein Gemisch von Sauerstoff und Ozon entstehen.

Elektrolysezellen dieser Art sind gemäß der DE 42 27 732 C2 bekannt. Sie erfordern ein Anpressen der porösen, planaren Anode und Kathode auf die Oberflächen der Feststoffelektrolytmembran. Der Anpreßdruck der Elektroden auf die Membran ist dabei ein wichtiger Parameter für einen optimalen Zellenbetrieb. So sind die Zellspannung und die Stromausbeute vom Anpreßdruck abhängig. Der Anpreßdruck muß dabei zur Erreichung einer über der gesamten Elektrodenfläche gegebenen gleichmäßigen Stromverteilung möglichst über diese homogen sein, so daß sich dort ein gleichmäßiger Flächendruck ausbildet. Dies ist insbesondere bei großflächigen Elektroden problematisch.

Gemäß der DE 42 27 732 C2 ist dabei eine insbesondere zur Erzeugung von Ozon geeignete Elektrolysezelle bekannt, bei der zur Optimierung der Zellparameter und zur Erreichung eines optimalen Zellenbetriebs der Anpreßdruck der Elektroden auf die Feststoffelektrolytmembran, bezogen auf deren Fläche, unabhängig vom Dichtdruck der Dichtflächen der Zellgehäuseteile homogem einstellbar ist, während früher die Einstellung des Flächendruckes der Elektroden auf die Feststoffelektrolytmembran durch äußere Anpreßvorrichtungen in Form von die Gehäuseschalen der Elektrolysezellen verbindenden Schrauben oder Zugstangen gleichzeitig nur mit der Einstellung des Dichtdruckes der Dichtflächen der Zellgehäuseteile erfolgen konnte.

Durch die Führung der verwendeten Kathode oder Anode in der Elektrolysezelle auf einer Elektrodenandruckplatte, welche unter zentrischer Lagerung mittels einer durch die Zellgehäusewandung geführten äußeren Stelleinrichtung in einer parallelen Ebene zur Außenfläche der Feststoffelektrolytmembran verstellbar ist und zusammen mit Teilen der Stelleinrichtung eine Anpreßvorrichtung bildet, wird dabei erreicht, daß bei einer Veränderung des Anpreßdruckes der beiden Elektroden der Elektrolyszelle gegenüber der Feststoffelektrolytmembran der Flächendruck über die gesamten Kontaktfläche zwischen Feststoffelektrolytmembran und den Elektroden weiterhin homogen bleibt. In der Stelleinrichtung wird dabei ein Andruckbolzen verwendet, welcher genau auf die Mitte der Rückseite der Elektrodenandruckplatte in ein dortiges Zentrier- und Andrucklager einwirkt und eine Übertragung der wirkenden äußeren Anpreßkraft als zwischen den Elektroden und der Feststoffelektrolytmembran wirksam werdenden Flächendruck erlaubt. Da die Elektroden und die Feststoffelektrolytmembran im allgemeinen schon in parallelen Ebenen zueinander ausgerichtet sind, ist dabei ein Eingriff des Andruckbolzens an der Rückseite der Elektrodenandruckkplatte im allgemeinen nur in Form eines Zentrier- und Andrucklagers notwendig, wobei in einfachster Weise dies auf der Rückseite der Elektrodenandruckplatte als konusoder halbkugelförmige Materialausnehmung angelegt sein kann, in welche die entsprechend dieser Öffnung abgemessene Zentrierspitze des in einem kegelförmigen Endabschnitt auslaufenden Andruckbolzens derart eingreift, daß die Elektrodenandruckplatte gegenüber dem Andruckbolzen zentriert und bei einer Längsverschiebung des Andruckbolzens von diesem in einer parallelen Ebene verstellbar ist.

Die Einstellung des Dichtdruckes an den Stirnflächen der Zellgehäuseschalen erfolgt dabei durch einen am äußeren umlaufenden Flansch der Gehäusewandungen der Elektrolysezelle angelegten und in dortige Gewindebohrungen oder äußere Feststellschrauben festlegbaren Kranz von Zugschrauben. Bei einer Lagerung des Randes der Feststoffelektrolytmembran zwischen diesen miteinander zu verschraubenden Stirnflächen wird dabei gleichzeitig neben einer Abdichtung und Verbindung der Zellgehäuseschalen eine umlaufende dichte Einklemmung der Feststoffelektrolytmembran zwischen den Dichtflächen der Zellgehäuseschalen erreicht, so daß eine gastechnische Trennung von Kathoden- und Anodenraum durch die Feststoffelektrolytmembran sicher gewährleistet ist.

Die Einstellung des Dichtdruckes der Zellgehäuseschalen erfolgt dabei unabhängig von der Betätigung der seitlich die Elektroden flächig erfassenden Anpreßeinrichtung.

Über die Elektrodenandruckplatte erfolgt dabei die elektrische Kontaktierung der dort angeordneten Elektrode. Ferner erfolgt die elektrische Kontaktierung durch den nach außen durch die Zellgehäusewandung geführten Andruckbolzen, wobei diese Teile aus elektrisch leitfähigem Werkstoff gebildet sind und im Fall eines ein unterschiedliches, kathodisches Potential besitzenden Zellgehäuses gegenüber diesem durch einen das Lager des Andruckbolzens außen umgebenden Isolationskörper elektrisch isoliert sind.

Die Lagerung der Elektrode, welche der an der Elektrodenandruckplatte angelegten Elektrode gegenüberliegt, erfolgt dabei starr auf einem flächigen Lagerabschnitt der Innenwandung des Zellengehäuses oder auf einem Elektrodenandruckstempel mit einem flächigen Lagerabschnitt, welcher parallel zur Ebene der Feststoffelektrolytmembran ausgerichtet ist.

Es ist dabei bekannt, das Zentrier- und Andrucklager zwischen Andruckbolzen und der Mitte der Elektrodenandruckplatte gleichzeitig als Schwenklager auszubilden, welches eine Verkippung der Elektrodenandruckplatte quer zur Rotations- und Verstellachse des Andruckbolzens erlaubt. Dabei ist an der Rückseite der Elektrodenandruckplatte als Eingriffsöffnung eine zentral angelegte, konusförmige oder halbkugelförmige Materialausnehmung vorgesehen, in welcher das Ende des Andruckbolzens mit einem kegelförmig nach vorne zulaufenden Endabschnitt eingreift, wobei die Neigungswinkel dieser kegelförmig geneigten Mantelfläche des Bolzenabschnittes gemessen gegenüber dessen Mittellängsachse kleiner als der halbe Öffnungswinkel der konus- oder halbkugelförmigen Materialausnehmung ist. Da sich insofern ein Spiel zwischen dem Endabschnitt des Andruckbolzens und der konus- oder halbkugelförmigen Materialausnehmung in der Elektrodenandruckplatte ergibt, kann diese quer zur Rotations- und Verstellachse des Andruckbolzens verkippt werden.

Die Lagerung und Führung des längsverschieblichen Andruckbolzens der Elektrodenandruckplatte erfolgt dabei entweder über ein unmittelbar in der Zellgehäusewandung angelegtes Führungslager mit Innengewinde für den als Andruckschraube ausgebildeten Andruckbolzen oder dabei über eine in der Gehäusewandung aufgenommene Führungsbuchse, in welcher der Andruckbolzen längsverschieblich gelagert ist, wobei ein Gewindeeingriff zwischen Führungsbuchse und einer dort aufschraubbaren Überwurfmutter vorgesehen ist, welche mit dem Endabschnitt des Andruckbolzens verbunden ist und somit durch Drehung ein Einschrauben oder Herausschrauben des Andruckbolzens und damit dessen Längsverstellung erlaubt.

Nachteilig ist die Elektrolysezelle gemäß der DE 42 27 732 C2 insofern, als diese zur Erzeugung von O₂ und O₃ nur in Medien mit geringem elektrischen Leitwert betrieben werden kann. Dies da die Zelle auf ihrer Außenseite zwei entgegengesetzte elektrische Anschlußpole für die Kathode und Anode aufweist, wobei in einem Medium mit geringen elektrischen Leitwert es insofern zu einer Elektrolyse kommen kann. Freiliegende äußere Anschlußpole ergeben sich dabei insofern, als der durch die Zellgehäusewandung geführte Andruckbolzen der Elektrodenandruckplatte gleichzeitig als Stromzuführung für die an dieser befestigte Elektrode dient und dabei in seinem äußeren Abschnitt als elektrischer Pol außerhalb des Zellgehäuses freiliegt. Das Zellgehäuse selbst oder zumindest der Anschluß der Elektrodenandruckplatte der das entgegengesetzte Potential führenden Elektrode, welcher ebenfalls nach außerhalb des Zellgehäuses geführt ist, bildet dabei ebenfalls ein außen auf die Zellgehäusewandung freiliegenden Anschlußpol, welcher insofern ein entgegengesetztes elektrisches Potential aufweist, so daß die Elektrolysezelle auf keinen Fall als Eintauchzelle in einer äußeren Flüssigkeit mit höherem Leitwert betrieben werden darf.

Sofern eine äußere Flüssigkeit mit einem elektrischen Leitwert von größer 20 µS/cm gegeben ist, kommt es dabei durch die zusätzliche äußere Elektrolyse zur Ablagerung von Ca-, Na- und anderen Verbindungen am Zellgehäuse und deren Spannungspole, wobei die Funktionsfähigkeit negativ beeinflußt wird und sich elektrische Verluste und eine geringere Ozon-Ausbeute ergibt.

Derartige Zellen werden dabei nicht als Tauchzellen verwendet und nur zur Ozonisierung von chemisch reinem Wasser betrieben, wie es im Pharma- und Kosmetikbereich verwendet wird. Dieses Wasser mit äußerst geringem elektrischen Leitwert wird dabei insbesondere in dem Anodenraum ständig eingespeist, wobei sich an den Elektroden Wasserstoff und Sauerstoff, bei Wahl einer geeigneten Aktivierung der Anode Ozon entwickelt, wobei diese Gase sich im Wasser getrennt im Anoden- und Kathodenraum lösen. Das Wasser stellt dabei das zu ozonisierende Medium dar, wobei sich insofern die Elektrodeneinheit aus Anode, Feststoffelektrolytmembran und Kathode ständig im zu ozonisierenden Medium befindet.

Ein weiterer Nachteil von Elektrolysezellen gemäß der DE 42 27 732 C2, bei denen die Kathoden- und Anodenanschlußpole sich außerhalb des Zellgehäuses frei befinden und somit die Zelle ohne zusätzliche äußere wasserdichte Schutzabkapselung innerhalb einer zu ozonisierenden Flüssigkeit nicht betrieben werden kann, besteht darin, daß zwischen dem Ort, wo die Elektrolyse zur Herstellung von Ozon zu betreiben ist, und dem Ort der Ozoneinleitung längere Wege gegeben sind, wobei auch bei kürzeren Strecken durch Leckagen Ozon auf dem Weg zur Einleitung austreten kann. Die Ozoneinleitung verringert sich dabei, wobei zusätzlich die Ozonkonzentration in der Luft am Aufstellort der Elektrolysezelle, also im Labor oder der Fabrik, zu überwachen und auf die Einhaltung von Vorschriften für die Arbeitsplatzüberwachung zu achten ist.

Die Aufgabe der vorliegenden Erfindung besteht daher in der Schaffung einer insbesondere zur Ozonherstellung geeigneten Elektrolysezelle gemäß der DE 42 27 732 C2, welche eine Einstellung des Anpreßdruckes der Elektroden auf die Feststoffelektrolytmembran und damit der davon abhängigen Zellparameter weiterhin unabhängig von der Einstellung des Dichtdruckes der Dichtflächen der Zellgehäuseteile erlaubt, wobei ferner aber die Elektrolysezelle auch als Eintauchzelle ohne zusätzliche Abkapselung unmittelbar in dem zu ozonisierenden Medium betreibbar ist und dabei auch solche Medien ozonisierbar sind, welche kein reines Wasser darstellen, also einen Leitwert größer als 20 µS/cm aufweisen, wie Brauch- und Abwasser und andere gewerblich oder industriell anfallende Flüssigkeiten.

Insofern soll insbesondere die Ozoneinleitung verbessert und die Ozonausbeute der Elektrolysezelle möglichst erhöht werden.

Zur Lösung dieser Aufgabe ist eine Elektrolysezelle vorgesehen, welche gemäß den Merkmalen des Anspruches 1 ausgebildet ist.

Im Gegensatz zur Elektrolysezelle gemäß dem DE 42 27 732 C2 ist somit der anodische Anschlußpol des Zellgehäuses isoliert in das Innere der Zelle geführt, wobei die Stromzuführung gemäß Anspruch 4 und 9 vorrzugsweise über ein gegen oxidierende Flüssigkeiten geschütztes Stromkabel erfolgt, welches durch die Zellgehäusewandung auf der Anodenseite geführt ist und gemäß Anspruch 2 innerhalb der Zelle einen geschützten Anschluß der Anode an der Elektrodenandruckplatte kontaktiert. Die Stromzuführung erfolgt somit unter Isolation gegen die Zellgehäusewandung und den Außenbereich der Zelle, wobei im Gegensatz zur DE 42 27 732 C2 der elektrische Anschluß der Anode nicht über einen als elektrischen Leiter ausgebildeten oder verwendeten Andruckbolzen für die Elektrodenandruckplatte erfolgt. Da die Elektrodenandruckplatte als solche ein anodisches Potential besitzt, da sie Träger der Anode ist, dagegen der Andruckbolzen ein kathodisches Potential besitzt, sofern er gemäß Anspruch 3 wie das Zellgehäuse aus einem elektrisch leitfähigen Werkstoff, z.B. Edelstahl, besteht und dabei mit der Kathode elektrisch verbunden ist, ist dabei bei einem derartigen Zellaufbau der Andruckbolzen gegenüber dem Zentrier- und Andrucklager auf der Rückseite der Elektrodenandruckplatte elektrisch isoliert gelagert.

Die Ausbildung einer zusätzlichen Elektrolyse innerhalb des Anodenraumes zwischen dem Andruckbolzen und der Elektrodenandruckplatte, die unterschiedliches Potential besitzen, wird dabei dadurch vermieden, daß zumindest das Innere des Anodenraumes der Zelle mit vollentsalztem Wasser aufgefüllt und somit eine elektrische Isolierung zwischen den beiden entgegengesetzten elektrischen Spannungspolen innerhalb der Zelle gegeben ist. Da auf der Außenseite der Elektrolysezelle sich keine elektrischen Spannungspole mit unterschiedlicher Polarität gegenüberstehen, und dabei an dem Zuund Abfluß für Zellwasser im Anoden- bzw. Kathodenraum Rohrleitungen angebracht sind, welche eine Versorgung und Entsorgung der Zelle mit Zellwasser und überschüssigem Zellwasser und sich bildenden Gasen erlauben, ist dabei eine Einbringung der Elektrolysezelle in industrielle und gewerbliche Abwasser, insbesondere Brauch- und Abwasser mit einem Leitwert von mehr als 20 µS/cm möglich.

Wie bei der Elektrolysezelle gemäß der DE 42 27 732 C2 muß dabei ein minimaler Wasserdurchfluß durch die Elektrolysezelle von z.B. 10 - 20 l/h gewährleistet sein, wobei dies auf speziellen Wege mit vollentsalztem Wasser beispielsweise über eine Osmoseeinheit oder ein lonenaustauschersystem erfolgt, welches unmittelbar an einer einfachen Trinkwasserleitung anschließbar ist und die Elektrolysezelle somit kontinuierlich mit geringen Mengen entsalztem bzw. entmineralisiertem Wasser versorgt. Dabei reicht eine Menge von 0,1 l/h bei einer Ozonausbeute von 5 g/h aus.

Ein wesentlicher Unterschied zu den bisherigen Elektrolysezellen, insbesondere gemäß der DE 42 27 732 C2 besteht somit darin, daß die Elektrodeneinheit (Anode, Membran, Kathode) nicht im zu ozonisierenden Medium sich befindet, sondern nur mit vollentsalztem Wasser (Zellwasser) zur Produktion des Ozons versorgt wird. Das entstandene Ozon wird erst anschließend an das zu behandelnde Medium, z.B. Brauchwasser, zusammen mit dem überschüssigen Zellwasser abgegeben, wobei bei einem Betrieb der Elektrolysezelle als Tauchzelle in dem zu ozonisierenden Medium der kürzeste mögliche Weg von der Ozonerzeugung zur Anwendung ermöglicht wird. Dabei können bestehende Tanks oder Becken, welche z.B. zur Wasserbehandlung dienen, ohne weiteren Umbau verwendet werden, ohne daß zusätzliche Pumpen oder Rohrleitungen benutzt werden müssen. Durch die Verwendung der Elektrolysezelle als Tauchzelle zur Ozonisierung ergibt sich dabei ein sehr hoher Eintragungswirkungsgrad des Ozons im zu behandelnden Abwasser.

Eine externe Kühlung, wie bei konventionellen Ozongeneratoren, ist dabei nicht notwendig.

Es lassen sich dabei Abwässer aus vielen Industrie- und Gewerbebereichen wie z.B. Petrochemie, Maschinenbau, Nahrungsmittel, Pharma, Kosmetik, Textil u.s.w., welche neben absetzbaren, filtrierbaren Substanzen und statisch freiabscheidbaren Ölen und Fetten einen großen Anteil an stabilen Emulsionen aufweisen ohne Zugabe zusätzlicher Chemikalien zur Aufarbeitung der Emulsionen reinigen. Die Emulsionen werden dabei durch das eingeleitete Ozon oxidiert, wobei die entstehenden Stoffe in üblicherweise abscheidbar sind. Es ist somit nicht mehr die Zuführung von Säuren, Metallsalzen und mineralischen Adsorbtionsmitteln zur Aufarbeitung der Emulsionen notwendig, wobei sich insofern das Abfallvolumen verringert und keine Problemverlagerung vom Abwasser zum Sondermüll einstellt.

Da das Ozon alle oxidierbaren Substanzen oxidiert, führt dies zur einfachen Fällung und Flockung von Wasserinhaltsstoffen, die dann wiederum in der Abscheidekette der Wasseraufbereitung zurückgehalten werden. Es ist dabei insbesondere der Abbau von Kohlenwasserstoffen wie Benzin, Öl, Lösungsmittel möglich, wobei sich bei der Abwasserbehandlung der chemische Sauerstoffbedarf verringert.

Die Ansprüche 5 - 13 betreffen dabei vorteilhalfte Ausbildungen der Stromzuleitung in das Innere der Zelle sowie der Stromdurchführung durch die Zellgehäusewandung des Anodenraums sowie der Kontaktierung des elektrischen Leiters des verwendeten Stromkabels gegenüber der Elektrodenandruckplatte. Es ist insofern insbesondere eine wasserdichte Stromdurchführung durch die Zellgehäusewandung sowie eine optimale Kontaktierung und Abdichtung des Endes des verwendeten Stromkabels in einer Sackbohrung der Elektrodenandruckplatte gegeben.

Die Ansprüche 14 und 15 betreffen dabei die Ausbildung des Wasserzu- und -abflusses zum Anodenraum, wobei insbesondere die Anbringung einer Zuleitung für Zellwasser mit einer Rohrverschraubung am Wasserzufluss und die Anbringung eines Anschlusses mit einer entsprechenden Rohrverschraubung am Wasserabfluß für eine das überschüssige, mit Ozon angereicherte Zellwasser im zu reinigenden Abwasser verteilende Kreiselpumpe erfolgt.

Gemäß Anspruch 32 ist der Aufbau der Elektrolysezelle zur Durchführung der Wasserelektrolyse derart vorgesehen, daß Wasser als Reagenz- und Kühlmittel lediglich an der Anodenseite zugeführt wird. Insofern ist ein Wasserdurchfluß im Zellgehäuse lediglich über den Anodenraum vorgesehen, wobei zum Abführen von Reaktionsprodukten aus dem Kathodenraum, in welchem durch die Feststoffelektrolytmembran wanderndes Permeatwasser und Wasserstoffionen auftreten, lediglich eine einzige Ausgangsöffnung angelegt ist. Über geeignet geführte Leitungen wird dabei gewährleistet, daß sich der bildende molekulare Wasserstoff nicht mit dem ozonisierten Zellwasser mischen kann.

Anspruch 17 und 18 betreffen dabei Maßnahmen zur Wasserverteilung und zum Abfangen von sich an den Elektrodenkontaktflächen bildenden Gasen, wobei gemäß Anspruch 18 die Anordnung von flächigen Streckmetallnetzen oder -blechen seitlich zur Lagerung und Kontaktierung der Kathode vorgesehen ist.

Insbesondere bei Ausbildung der Kathode gemäß Anspruch 21 aus einem elastischen Elektrodenmaterial, welches aus einem Kohlenstoff-Fasermaterial gemäß den Ansprüchen 22 - 26 gebildet wird, ergibt sich dabei in Verbindung mit der Verwendung mehrerer Streckmetallbleche als zweite Komponente zu dem elastischen Kathodenmaterial eine Elektrodeneinheit, welche gegen herkömmlichen Elektrodeneinheiten eine erheblich höhere Ozonausbeute aufweist. Es wird dabei zur Herstellung etwa der gleichen Ozonmenge lediglich etwa ein Viertel der bisher notwendigen Größe bzw. Anzahl der Elektrodenpaare bzw. Elektrodeneinheiten benötigt.

Die Elektroden können dabei wie in der Elektrolysezelle gemäß der DE 42 27 732 C2 mehrschichtig ausgebildet sein, wobei die Anoden-Elektrode bei Verwendung in einer Wasserelektrolysezelle zur Ozonherstellung eine Oxidationskatalysatorbeschichtung oder eine PbO₂-Beschichtung auf einer gesinterten Titanschicht aufweist, welche einen dünnen Platinüberzug aufweist (Anspruch 27 - 29).

Vorteilhafte Ausbildungen der Feststoffelektrolytmembran ergeben sich dabei aus den Ansprüchen 30 und 31. Insofern wird insbesondere eine optimale Ozonherstellung sichergestellt, wobei in dem Wasserelektrolyse-Prozeß zur Ozonherstellung der Strom in der Feststoffelektrolytmembran durch hydratisierte Protonen transportiert wird (H⁺ (H₂Oₓ).
Das Wasser dient dabei sowohl als Reagenz als auch als Kühlmittel auf der Anodenseite. Die Elektrodenreaktionen finden dabei an den Grenzflächen Elektrode/Feststoffelektrolytmembran statt. Die Elektroden können dabei mit einer unbeschichteten perfluorierten Kationenaustauschermembran kontaktiert werden, welche als solche keinen Elektrokatalysator trägt. Bei der Ozonherstellung durch Wasserelektrolyse tritt bei Verwendung einer Kationenaustauschermembran Ozon als Nebenprodukt zur anodischen Sauerstoffentwicklung an Anoden mit hoher Überspannung auf.

Es ist dabei möglich, direkt eine wässrige Ozonlösung herzustellen. Zur Ozonbildung müssen dabei die Anoden durch die Oxidationskatalysatorbeschichtung die dazu notwendige Polarisation aufweisen.

Eine erfindungsgemäße Elektrolysezelle zur Ozon- und Sauerstoffherstellung, welche als Eintauchzelle direkt im industriellen oder gewerblichen Schmutzwasser zum Ausfällen von oxidierbaren Substanzen verwendbar ist, wird im folgenden anhand der Zeichnungen einer bevorzugten Ausführungsform näher beschrieben.

In den Zeichnungen zeigen:
- Figur 1:: Einen Querschnitt durch die zur Ozon- und Sauerstoffherstellung verwendete Elektrolysezelle, wobei der Anodenraum über eine Speisewasserversorgung mit entmineralisiertem Wasser versorgt wird, welches insofern einen geringen Leitwert aufweist und somit elektrisch nicht leitend ist;
- Figur 2:: Einen Querschnitt durch die Elektrolysezelle gemäß Figur 1, wobei die beiden Zellgehäuseschalen der Elektrolysezelle sowie die verwendeten Elektroden, Streckmetallbleche sowie die Feststoffelektrolytmembran in gesprengter Darstellung nebeneinander angeordnet sind.

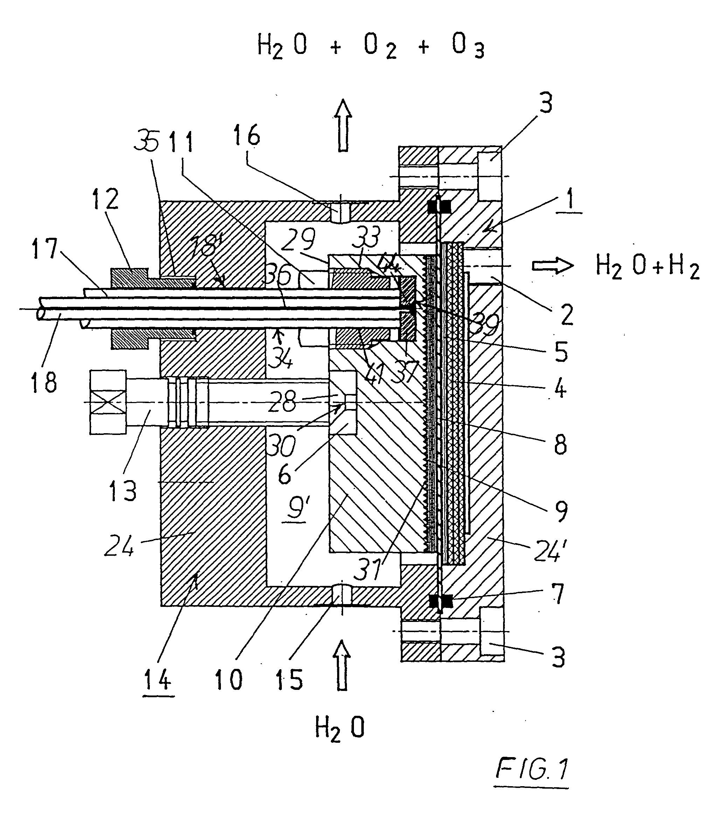

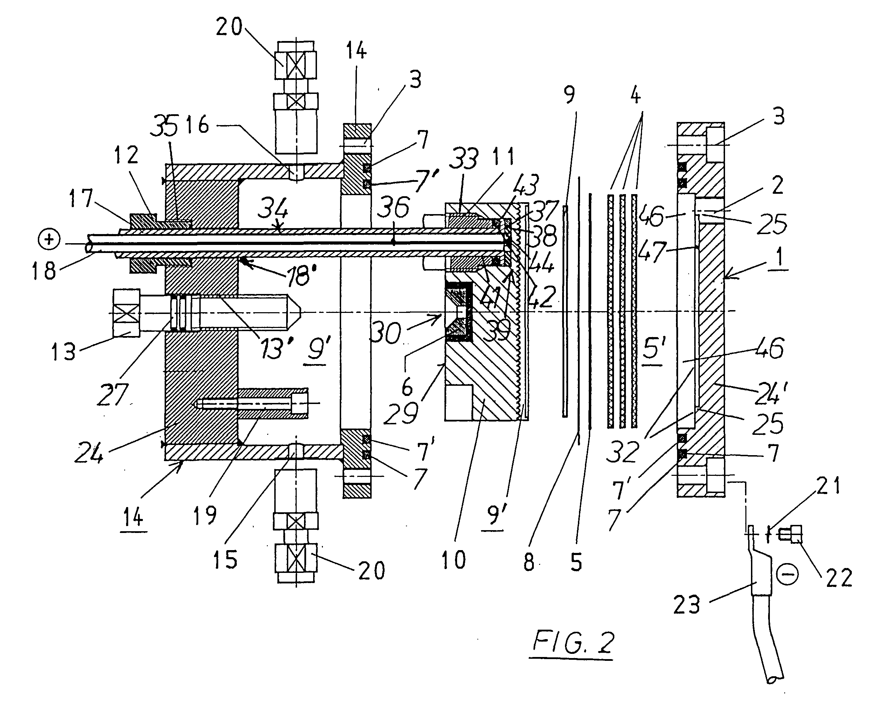

Im Gegensatz zu einer Elektrolysezelle gemäß der DE 42 27 732 C2, welche zur Erzeugung von Ozon und Sauerstoff nur in chemisch reinem Wasser zu verwenden ist, welches z.B. im Pharma- und Kosmetikbereich benötigt wird, kann die erfindungsgemäße Elektrolysezelle wie die Ausführung gemäß Figur 1 und 2 zeigt, unmittelbar auch in Medien mit höherem elektrischem Leitwert eingesetzt werden, wie in Brauch- und Abwasser.

Die Elektrolysezelle ist dabei derart konzipiert, daß eine Stromversorgung möglich ist, ohne daß sich über äußere freiliegende Polflächen der Elektrolysezelle eine äußere Elektrolyse in dem insofern eine Elektrolyt darstellenden Brauch- und Abwasser einstellen kann.

Bei der in Figur 1 und 2 dargestellten Elektrolysezelle, welche aus zwei miteinander verschraubbaren Zellgehäuseschalen (1,14) gebildet wird, welche die Kathodenseite bzw. Anodenseite der Zelle umgeben, ist dabei das Zellgehäuse aus einem elektrisch leitfähigen und korrosionsbeständigen Werkstoff nämlich Edelstahl gefertigt, wobei die Kathode (5) elektrisch mit der am Kathodenraum (5') angrenzenden Zellgehäuseinnenwandung (32) verbunden ist, so daß das Zellgehäuse während des Betriebs der Elektrolysezelle auf kathodischem Potential liegt, welches über den rechts dargestellten Zellgehäuseanschluß (23) vorgegeben ist (Masse). Dabei befindet sich der Andruckbolzen (13), welcher auf die Andruckplatte (10) der Anode (9) wirkt, ebenfalls auf kathodischem Potential. Dagegen befindet sich der Anschluß für das anodische Potential unmittelbar im Innern der Zelle an der Elektrodenandruckplatte (10), wobei in der Zellgehäusewandung (24) der Zellgehäuseschale (14) eine elektrische Stromdurchführung (18') für eine Stromzuführung (18) zur Anode (9) vorgesehen ist.

Die Stromzuführung (18) erfolgt dabei über ein Stromkabel (34), dessen inneres Ende bis in eine Sackbohrung (33) der Elektrodenandruckplatte (10) geführt ist und dort mit seinem Leiter (36) die Elektrodenandruckplatte (10) und damit die auf deren Außenseite befindliche Anode (9) elektrisch kontaktierte wobei ansonsten der Kabelmantel auch gegen umgebende Flüssigkeit schützt. Insofern erfolgt die Stromzuführung geschützt und gegen die Zellgehäusewandung (24) und den Außenbereich der Elektrolysezelle zur Elektrodenplatte (10) isoliert bis in die auf der Rückseite (29) der Elektrodenandruckplatte (10) angelegte Sackbohrung (33).

Der Anschluß für die anodische Stromversorgung ist somit isoliert in das Innere der Elektrolysezelle geführt, so daß außerhalb der Elektrolysezelle lediglich kathodisches Potential der Stromversorgung anliegt. Durch dieses kathodische Potential des aus Edelstahl gebildeten Zellgehäuses wird dabei insbesondere in aggressiven Medien wie Salzwasser ein kathodischer Korrosionsschutz erzielt.

Im Innern der Elektrolysezelle kann es dabei in dem Anodenraum (9'), in welchem über die Elektrodenandruckplatte (10) und die Anode (9) anodisches Potential und über die Zellgehäusewandung (24) und dem Andruckbolzen (13) kathodisches Potential ansteht, nicht zu einem Kurzschluß oder einer Elektrolyse kommen, da die Elektrolysezelle permanent mit entmineralisiertem Wasser versorgt wird, welches über einen Wasserzufluß (15) zum Anodenraum (9') eintritt und über einen Wasserablauf (16) als überschüssiges Wasser mit gelöstem Ozon und Sauerstoff austritt. Dabei liegt an dem Wasserzufluß (15) ein kompaktes System zur Versorgung der Zelle mit maximal 1 l/h entmineralisiertem Wasser an. Die insofern notwendige Zellwasser-Versorgung kann dabei an jede Trinkwasserleitung problemlos angeschlossen werden. Das Zellwasser wird dabei durch eine Osmoseeinheit oder auch durch Ionenaustauscher erzeugt, durch welche eine Entzalzung des Leitungs- bzw. Trinkwassers erfolgt, so daß Zellwasser mit einem Leitwert geringer als 20 µS/cm entsteht.

Aufgrund der gewählten Feststoffelektrolytmembran und der Struktur der Anode wird dabei ein Gemisch von Sauerstoff und Ozon im Anodenraum gebildet, wobei der Überschuß an zugeführtem Zellwasser, welches nicht als Permeatwasser in den Kathodenraum (5') wandert, unmittelbar über den Wasserablauf (16) mit in ihm gelösten oder angereicherten Ozon und Sauerstoff nach außerhalb der Elektrolysezelle und somit beispielsweise in das Brauch- und Abwasser geführt wird, in welchem die Elektrolysezelle eingetaucht ist.

Das im Kathodenraum (5') entstehende Permeat-Wasser und Wasserstoffgas wird dabei in einem Bereich außerhalb der Elektrolysezelle geführt, welcher nicht in Verbindung mit dem erzeugten Ozon besteht, so daß kein Knallgas entstehen kann.

Aus diesem Grund sind zum Anschluß von Rohrleitungen am Wasserzufluss und -abfluss (15,16) des Anodenraumes (9') Rohrverschraubungen (20) jeweils vorgesehen, so daß der Wasserabfluß (16) über eine Leitung zu einer Kreiselpumpe führbar ist, welche in einem kein Wasserstoff aufweisenden Bereich des zu ozonisierenden Brauch-/Abwassers angeordnet ist.

An dem Ausgang (2) des Kathodenraumes (5') erfolgt dabei vorzugsweise ebenfalls der Anschluß einer Leitung über eine entsprechende Rohrverschraubung (20).

Der Unterschied zu bisherigen Elektrolysezellen gemäß der DE 42 27 732 C2 besteht insofern außer darin, daß der anodische Stromversorgungsanschluß innerhalb die Zelle verlegt ist, ferner darin, daß die Elektrodeneinheit (Anode, Feststoffelektrolytmembran, Kathode) sich nicht im zu ozonisierenden Medium (Brauch-/Abwasser) befindet und dabei separat mit vollentmineralisiertem Wasser mit geringem elektrischen Leitwert als Zellwasser zur Produktion des Ozons und Sauerstoffs ständig während der an der Elektrodeneinheit erfolgenden Elektrolyse versorgt wird.

Das entstandene Ozon wird sofortanschließend an das zu behandelnde Medium, also z.B. Brauch- und Abwasser, abgegeben. Um eine Elektrolyse mit hohen Wirkungsgrad durchzuführen, weist dabei die Anodenandruckplatte (10) eine profilierte äußere Stirnseite auf, an welcher die Anode (9) befestigt ist. Des weiteren wird vorzugsweise elastisches Elektrodenmaterial eingesetzt, wobei statt einer aus gesinterter Bronze bestehenden Kathode (5) ein weiches elektrisch leitfähiges Kohlenstoff-Fasermaterial in Form eines carbonisierten und graphitierten Filzes auf PAN-Faser-Basis als Kathodenmaterial dient. Seitlich dazu sind dabei unter Kontaktierung der Innenwandung (32) der angrenzenden Zellgehäuseschale der Kathodenseite (1) Streckmetallbleche (4) aus Titan 3.7035 mit einer Dicke von 1,5 mm und einer Vielzahl von rautenförmigen Durchtrittsöffnungen angebracht, welche rasterförmig, eng aneinander angelegt sind mit einem Rautenmaß von 6 x 3 mm (Länge, Breite). Es wird insofern eine Zweikomponentenkathode mit freien Kathodenraumabschnitten gebildet.
Wie sich insbesondere aus der gesprengten Darstellung der Elektrodeneinheit aus Anode, Elektrolytmembran und Kathode gemäß Figur 2 entnehmen läßt, sind dabei seitlich der Kathode (5) drei einzelne Streckmetallbleche angeordnet. Die Verwendung des Kohlenstoff-Fasermaterials bringt dabei den Vorteil, daß dieses mit Permeatwasser sich voll aufsaugt und somit die Feststoffelektrolytmembran befeuchtet.

Es ist dabei eine spezielle Feststoffelektrolytmembran in Form einer auf der Basis perfluorierter Sulfosäuren aufgebauten Kationenaustauschermembran vorgesehen. Die Anode (9) besteht dabei aus gesintertem, also porösem Titan, welches mit Platin überzogen ist, wobei auf diesen Träger außen ein Elektrokatalysator aus PbO₂ galvanisch aufgebracht ist.

Aufgrund der neuen Elektrodeneinheit wird dabei gegenüber Elektrolysezellen mit herkömmlichen Elektrodeneinheiten eine erheblich höhere Ausbeute an sich entwickelndem Ozon erreicht, wobei mit einer einzigen derartigen Elektrodeneinheit in der Elektrolysezelle 4 g Ozon/h herstellbar ist, während bei einer Elektrolysezelle gemäß der DE 42 27 732 C2 vier Elektrodenpaare zur Herstellung von 5g Ozon/h benötigt wurden.

Durch das als Kathode verwendete Kohlenstoff-Fasermaterial wird dabei eine gute Kontaktierung der seitlich der Kathode angeordneten drei Streckmetallbleche (4) erreicht. Es ist dabei ein ausreichender Abstand zwischen Kathode und der angrenzenden Innenwandung (32) der kathodenseitigen Zellgehäuseschale (1) gegeben, so daß sich ein optimaler Gas- und Wasseraustausch einstellt.

Das filzartige Kohlenstoff-Fasermaterial der Kathode besitzt dabei eine Dicke von 2,5 - 3 mm und weist dabei eine aktive Oberfläche aus Kohle auf, wobei der Filz sich 100%-ig an die Form der Feststoffelektrolytmembran anpaßt. Es ist insofern ein guter elektrischer Kontakt mit geringem Übergangswiderstand gegeben.

Grundsätzlich können dabei die Streckmetallbleche (4) statt aus Titan auch aus Edelstahl, Kupfer oder einem anderm Material mit guter elektrischer Leitfähigkeit gebildet werden, sofern diese Materialien bei Anlage einer größeren Anzahl von Durchströmungsöffnungen eine ausreichende Formstabilität zulassen.

Um einen einfachen Betrieb der Elektrolytzelle als Tauchzelle in Brauch- und Abwasser, also Wasser mit einem Leitwert von mehr als 20 µS/cm zu ermöglichen, weisen die Zellgehäuseschalen (1,14) als breite Dichtflächen ausgebildete Stirnflächen auf, in welchem zwei O-Dichtringe (7,7') konzentrisch zueinander jeweils verlaufen.

In Figur 2 ist dabei sowohl der äußere O-Dichtring (7) als auch der innere O-Dichtring (7') dargestellt, während in Figur 1 lediglich der äußere O-Dichtring (7) wiedergegeben ist.

Zwischen den insofern vier gegenüberliegenden 0-Dichtringen (7,7') der beiden Zellgehäuseschalen ist dabei die Feststoffelektrolymembran (8) mit ihren Endabschnitten festgelegt. Es wirkt dabei dabei der Dichtdruck der beiden Dichtflächen der Zellgehäuseschalen (1,14) auf die Feststoffelektrolymembran, wobei dies unabhängig vom Anpreßdruck der Anode und Kathode auf die Feststoffelektrolytmembran erfolgt. Der Dichtdruck wird dabei durch einen Kranz von Schrauben (3) erzeugt, welche in Gewindebohrungen der beiden Dichtflansche einschraubbar sind.

Die in der Elektrolysezelle verwendete Elektrodeneinheit besteht dabei aus der Anode (9), der Feststoffelektrolytmembran (8) und der Kathode (5). Während die Kathode (5) aus einem elastischen Elektrodenmaterial in Form eines Kohlenstoff-Fasermaterials hergestellt ist und dabei fest auf den Streckmetallblechen (4) gegenüber der in einer Parallelebene zur Feststoffelektrolytmembran (8) ausgerichteten Innenwandung der kathodenseitigen Zellgehäuseschale (1) gelagert ist, befindet sich dabei die aus einem porösen gesinterten Titanträgermaterial aufgebaute Anode (9) auf einer profilierten Stirnfläche der verstellbaren Elektrodehandruckplatte (10). Diese ist dabei wie in den Ausführungsformen der DE 42 27 732 C2 über ein mittiges Zentrier- und Andrucklager (30), welches auf der Rückseite der Elektrodenandruckplatte, also in Richtung der äußeren Zellgehäusewandung (24) der anodenseitigen Zellgehäuseschale (14) angelegt ist, derart beweglich gelagert, daß durch einen in Längsrichtung auf dieses Lager (30) verstellbaren Endabschnitt eines Andruckbolzens (13) eine Zentrierung und/oder Verschwenkung zusammen mit der auf der vorderen Stirnfläche der Elektrodenandruckplatte gelagerten Anode möglich ist. Es wird insofern auch sichergestellt, daß der notwendige Anpreßdruck der Elektrodenandruckplatte (10) und damit der dort auf der äußeren Stirnfläche aufgenommenen Anode (9) gegen die Feststoffelektrolytmembran (8) erzeugt wird, ohne dabei diese zu verschieben oder zu verkanten.

Der Andruckbolzen (13), welcher mit seinem äußeren Endabschnitt (28) auf das Zentrier- und Andrucklager (30) wirkt, ist dabei auf der Anodenseite durch die Zellgehäusewandung (24) der Zellgehäuseschale (14) hindurchgeführt. Die Zellgehäusewandung (24) weist dabei eine verglichen zu der Länge des Andruckbolzens relativ große Dicke auf, so daß die in ihr angelegte Gewindebohrung gleichzeitig ein Führungslager (13') für eine sichere Längsführung des Andruckbolzens (13) bildet. Über O-Dichtungsringe (27) wird dabei eine Abdichtung des Gewindebolzens (13) in einem äußeren Bohrungsabschnitt des Führungslagers (13') erreicht.

Der Andruckbolzen (13) und das Führungslager (13') bilden insofern eine von außen betätigbare Stell- und Führungseinrichtung (13,13') für eine aus der Elektrodenandruckplatte (10) mit dem Andruckbolzen (13) gebildete Anpreßvorrichtung (10,13), welche die Anode (9) gegen die Feststoffelektrolytmembran (8) drückt.

In der Zellgehäusewandung (24) der Zellgehäuseschale (14) der Anodenseite ist dabei neben dem Lagerbolzen (13) die elektrische Stromdurchführung (18') für die Stromzuführung (18) zur Anode (9) seitlich angelegt. Die Stromzuführung erfolgt dabei unter Isolation gegen die Zellgehäusewandung (24) und den Außenbereich der Zelle, wobei insofern ein Kabel mit einer PVC-Ummantelung verwendet wird, welche insbesondere ozonbeständig ist und dabei zusätzlich eine Teflonbeschichtung (17) zur Abdichtung gegen Wasser aufweist. Dieses Stromkabel (34) ist dabei durch eine Durchgangsbohrung (35) in der Zellgehäusewandung (24) geführt, welche am äußeren Abschnitt einen Gewindeabschnitt aufweist, in welchem eine Abdichtschraube (12) mit einer Durchgangsbohrung für das Stromkabel (34) angelegt ist.

Bei Einschrauben der Abdichtschraube (12) in die Durchgangsbohrung (35) wird diese dabei an den Mantel des Stromkabels angedrückt und somit dieses Kabel zur Zelle nach außen und innen abgedichtet.

Das Stromkabel (34) weist dabei einen Kupferleiter mit 16 mm² Querschnittsfläche auf, so daß große Ströme von z.B. bis zu 60 Ampere durch die Elektrolysezelle und die Elektrodeneinheit zum kathodischen Zellgehäuseanschluß (23) der Elektrolysezelle führbar sind.

Der äußere Endabschnitt des Stromkabels (34) ist dabei in eine Sackbohrung (33) auf der Rückseite (29) der Elektrodenandruckplatte (10) geführt, wobei eine Festlegung und Abdichtung über eine Gewindebuchse (11) erfolgt, welche eine Durchgangsbohrung für das Stromkabel aufweist und ein äußeres Gewinde, mit welchem diese in ein Innengewinde der Sackbohrung (33) verschraubbar ist.

Die Gewindebuchse (11) weist dabei an ihrem vorderen, in die Sackbohrung (33) gerichteten Abschnitt eine Querschnittsverengung auf, welche in eine entsprechende Querschnittsverengung der Sackbohrung ragt und dort einen Dichtungsring (42) gegen ein nach außen abgebogenen Endabschnitt (43) der Kabelisolierung drückt, wobei dieser Endabschnitt wiederum gegen eine Stirnfläche eines messingringartigen Kontaktstückes (37) zur Anlage kommt. Das Kontaktstück (37) weist dabei eine äußere Kontaktfläche (38) auf, welche in einen Flächenkontakt mit der planen Stirnseite (39) am Ende der Sackbohrung (33) bringbar ist. Das Stromkabel (34) ist dabei im Zelleninnern derart in der Länge bemessen, daß es eine Verstellung der Elektrodenandruckplatte durch den Andruckbolzen (13) erlaubt, ohne die Kontaktierung seines Leiters (36) zu gefährden.

Da der Andruckbolzen (13) sich wie die übrigen Zellgehäuseteile auf kathodischem Masse-Potential befindet, während die Elektrodenandruckplatte (10) sich auf anodischem Potential befindet, ist dabei das Zentrierund Andrucklager (30) gegenüber dem Andruckbolzen (13) elektrisch isoliert ausgeführt. Es ist insofern ein Isolationskörper (6) vorgesehen, welcher in eine Ausnehmung auf der Rückseite der Elektrodenandruckplatte (10) eingebracht ist und dabei gegenüber der Wandung dieser Ausnehmung durch eine umlaufende Teflonbeschichtung zusätzlich elektrisch isoliert ist.

Eine zusätzlich besondere Isolation zwischen dem kathodischen Potential des Andruckbolzens (13) und dem anodischen Potential der Elektrodenandruckplatte (10) ist dabei nicht vorgesehen. Da das Innere des Anodenraumes (9') aber mit vollentsalztem Wasser aufgefüllt und nachfüllbar ist, welches einen elektrischen Leitwert von kleiner als 20 µS/cm aufweist, ist dabei eine zusätzliche Isolation der gegenüberliegenden unterschiedlichen Potentiale durch diese Flüssigkeit gegeben. Da diese Flüssigkeit einen äußerst geringen Leitwert aufweist, kann sich insofern in dieser auch keine Elektrolyse einstellen. Es ist insofern lediglich eine Elektrolyse an der Elektrodeneinheit gegeben, wobei insbesondere auch keine Elektrolyse außerhalb der Elektrolysezelle stattfindet, wie dies an sich bei einer Elektrolysezelle gemäß der DE 42 27 732 C2 möglich ist, da dort außen ein Übergang zwischen kathodischem und anodischen Potential gegeben ist.

Insofern wird die Bildung von Calzium, Natrium und anderen Salzen oder anderen Ablagerungen an der Außenseite der Elektrolysezelle vermieden, so daß deren Funktionsfähigkeit erhalten bleibt und elektrische Verluste vermieden werden.

Über eine unterhalb des Andruckbolzens (13) in den Anodenraum (9) ragende bolzenförmige Arretierung (19) ist dabei eine Drehung der Elektrodenandruckplatte (10) vermeidbar, wobei die bolzenförmige Arretierung (19) in eine Ausnehmung an der Rückseite (29) im Bereich des unteren Randes der Elektrodenandruckplatte eingreift und insofern die Elektrodenandruckplatte zusätzlich haltert.

Die kathodenseitige Zellgehäuseschale (1) weist dabei eine relativ geringe Breite auf, wobei sie lediglich einen Kathodenraum (5') aufweist, welcher aus einer Ausnehmung (46) und einer im Innenquerschnitt dazu verengten Fortsetzung (47) gebildet wird. In der Ausnehmung (46) werden dabei die Kathode (5) aus dem filzartigen Kohlenstoff-Fasermaterial sowie die angrenzenden 3 Streckmetallbleche (4) aufgenommen, wobei die am Übergang der Ausnehmung (46) zur Fortsetzung (47) gebildete äußere umlaufende Abstufung die die Kathode (5) bzw. drei Streckmetallbleche (4) lagernde und kontaktierende Gegenlagerung (25) zur Elektrodenandruckplatte (10) bildet.

Das filzartige Kohlenstoff-Fasermaterial der Kathode (5) ist dabei in Form von Filzen und Flocken (Wolle) durch Carbonisieren natürlicher und synthetischer Faser hergestellt. Es besitzt dabei eine hervorragende Flexibilität und läßt sich leicht an kleine Krümmungsradien anpassen. Das Material stellt dabei einen elektrisch leitfähigen carbonisierten und graphitierten Filz auf PAN-Faser-Basis dar und ist über die Firma SGL CARBON unter der Sortenbezeichnung SIGRATHERM KFD 2 erwerbbar (Vertrieb: Firma SIGRI GmbH, D-86405 Meitingen).

Das Flächengewicht beträgt dabei 320 g/m², die Rohdichte 0,1 g/cm³, die Dicke 2,5 - 3,0 mm, die Zugfestigkeit in Längsrichtung 76 N/mm und in Querrichtung 45 N/mm, die maximale Dehnung in Längsrichtung 4 % und in Querrichtung 7 %, der spezifisch elektrische Widerstand in Längs- und Querrichtung 1,5 Ohm mm, die spezifische Oberfläche BET ist kleiner als 1 m²/g und der Aschegehalt kleiner/gleich 1 %.

Das filzartige Kohlenstoff-Fasermaterial saugt dabei das im Kathodenraum befindliche Permeatwasser an und befeuchtet die Feststoffelektrolytmembran, auf welche es aufliegt.

### Bezugsziffernliste

- 1: Zellgehäuseschale der Kathodenseite
- 2: Ausgang des Kathodenraumes
- 3: Schrauben zur Festlegung und Abdichtung der Zellgehäuseschalen
- 4: Streckmetallbleche
- 5: Kathode
- 5': Kathodenraum
- 6: Isolationskörper in der Elektrodenandruckplatte
- 7,7': 0-Ringe auf den Stirnflächen der Zellgehäuseschalen
- 8: Feststoffelektrolytmembran
- 9: Anode
- 9': Anodenraum
- 10: Elektrodenandruckplatte
- 11: verschraubbare Gewindebuchse
- 12: Abdichtschraube
- 13: Andruckbolzen
- 13': Führungslager
- 13,13': Stell- und Führungseinrichtung
- 10,13: Anpreßvorrichtung
- 14: Zellgehäuseschale der Anodenseite
- 1,14: Zellgehäuse
- 15: Wasserzufluß
- 16: Wasserablauf
- 17: Teflonisolierung
- 18: Stromzuführung
- 18': Stromdurchführung
- 19: Arretierung der Elektrodenandruckplatte
- 20: Rohrverschraubung am Wasserzufluß und -ablauf
- 21: Sicherungsscheibe
- 22: kathodischen Stromversorgungspol darstellende Schraube des Zellgehäuseanschlusses
- 23: Zellgehäuseanschluß für das kathodische Stromversorgungskabel
- 24,24': Zellgehäusewandung
- 25: Gegenlagerung
- 26: -
- 27: 0-Dichtungsring
- 28: Endabschnitt des Andruckbolzens
- 29: Rückseite
- 30: Zentrier- und Andrucklager
- 31: Stirnfläche der Elektrodenandruckplatte
- 32: Innenwandung des Zellgehäuses
- 4,32: flächiger Lagerabschnitt
- 33: Sackbohrung
- 34: Stromkabel
- 35: Durchgangsbohrung
- 36: elektrischer Leiter
- 37: Kontaktstück
- 38: Kontaktfläche
- 39: Stirnfläche an Ende der Sackbohrung
- 40: -
- 41: Längsdurchführung
- 42: Abdichtung mit O-Ring in Sackbohrung
- 43: vorstehender Endabschnitt der Kabelummantelung
- 44: Ausnehmung
- 46: Ausnehmung
- 47: Ausnehmung in Fortsetzung der Ausnehmung (46)

## Patentansprüche

1. Elektrolysezelle, insbesondere zur Erzeugung von Ozon,
mit einer den Anoden- und Kathodenraum (9',5') voneinander trennenden Feststoffelektrolytmembran (8), deren anodische und/oder kathodische Seite zumindest eine aus einem planar ausrichtbaren, zumindest teilweise wasserdurchlässigen oder befeuchtbaren Aufbau aus elektrisch leitfähigen Material bestehende Elektrode (5) und/oder eine planare, zumindest teilweise poröse Elektrode (9), insbesondere aus einem gesinterten oder nichtporösen Träger aus einem metallischen Leiter und einer oder mehreren elektrisch leitfähigen Beschichtungen, aufweist, wobei die Anodenund Kathoden-Elektroden (5,9) mit der Feststoffelektrolytmembran (8) flächig in Kontakt stehen, die äußere Anodenfläche zur Herstellung von Ozon bei großer Überspannung aktiviert ist, das Zellgehäuse in einer Zellgehäusewandung (24) eine elektrisch isolierte Stromdurchführung (18') für eine Stromzuführung (18) zu einer der Elektroden (9) aufweist und aus mindestens zwei Zellgehäuseschalen (1,14) besteht, die gegeneinander abgedichtet sind, wobei eine Zellgehäuseschale (1) die Kathodenseite und die andere Zellgehäuseschale (14) die Anodenseite zumindest teilweise umschließt und die Feststoffelektrolytmembran (8) zwischen den aneinanderangrenzenden, als Dichtflächen ausgebildeten Stirnflächen der Zellgehäuseschalen (1,14) eingeklemmt ist und die Einstellung des Flächendruckes der beiden Elektroden (5,9) auf die Feststoffelektrolytmembran (8) unabhängig von der Einstellung des Dichtdruckes der Zellgehäuseschalen (1,14) durch eine durch die Zellgehäusewandung (24) zum Anodenraum (9') geführte Stell- und Führungseinrichtung (13,13') und eine von außen betätigbare Anpreßvorrichtung (10,13) erfolgt, wobei der Endabschnitt (28) eines durch die Zellgehäusewandung (24) geführten Andruckbolzens (13) mit einem auf der Rückseite (29) einer verstellbaren Elektrodenandruckplatte (10) mittig angelegten Zentrierund Andrucklager (30) in Eingriff steht,
wodurch die Zentrierung und/oder Verschwenkung der auf der äußeren Stirnfläche (31) der Elektrodenandruckplatte (10) gelagerten Anode (9) quer zur Verstellachse des Andruckbolzens (13) in einer parallelen Ebene zur Feststoffelektrolytmembran (8) erfolgt,
wobei der nach außen durch die Zellgehäusewandung (24) geführte Andruckbolzen (13) mittels der Stell- und Führungseinrichtung (13,13') in einer Längsführung eines Führungslagers (13') verstellbar gelagert ist und die Kathode (5), die der im Anodenraum (9') an der Elektrodenandruckplatte (10) angelegten Elektrode (9) gegenüberliegt, unter Bildung eines Kathodenraumes (5') seitlich der Innenwandung (32) des Zeilgehäuses, auf einer Gegenlagerung (25) ebenfalls in einer parallelen Ebene zur Feststoffelektrolytmembran (8) ausgerichtet und unter elektrischer Kontaktierung gegen diese angepreßt angeordnet ist,
**dadurch gekennzeichnet, daß**
die elektrische Stromdurchführung (18') für die Stromzuführung (18) zur Anode (9) in der Zellgehäusewandung (24) getrennt vom Andruckbolzen (13) seitlich neben diesem angelegt ist und daß die Stromzuführung (18) unter Abdichtung und unter elektrischer Isolation gegen die Zellgehäusewandung (24) und den Außenbereich der Zelle sowie Bildung eines Stromanschlußes innerhalb des Zellgehäuses unter Kontaktierung der als Träger und Anschluß der Anode (9) verwendeten Elektrodenandruckplatte (10) bis zu dieser zumindest durch das Innere des Anodenraums (9') elektrisch isoliert weiter geführt ist und daß der mit seinem Endabschnitt (28) gegen das Zentrier- und Andrucklager (30) mittig auf der Rückseite (29) der Elektrodenandruckplatte (10) geführte Andruckbolzen (13) gegenüber dieser elektrisch isoliert ist,
wobei das Innere des Anodenraumes (9') der Zelle mit vollentsalztem Wasser (Leitwert kleiner als 20 µS/cm) aufgefüllt und somit Elektrodenandruckplatte (10) und/oder Anode (9) gegenüber den Zellgehäuseschalen (1,14) und dem Andruckbolzen (13) elektrisch isoliert sind.

2. Elektrolysezelle nach Anspruch 1,
**dadurch gekennzeichnet, daß**
die Stromzuführung (18) mit einer äußeren elektrischen und gegen zu umgebende Flüssigkeit schützenden Isolierung bis in eine zur Außenseite der Elektrodenandruckplatte (10) sich öffnende Sackbohrung (33) zur dortigen Kontaktierung geführt ist.

3. Elektrolysezelle nach Anspruch 1 oder 2,
**dadurch gekennzeichnet, daß**
das Zellgehäuse (1,14) aus einem elektrisch leitfähigen Werkstoff besteht und daß die Kathode (5) elektrisch mit der am Kathodenraum (5') angrenzenden Zellgehäuseinnenwandung (32) verbunden ist, so daß das Zellgehäuse während des Betriebes der Elektrolysezelle auf kathodischem Potential eines elektrischen Zellgehäuseanschlußes (23) liegt, und daß der Andruckbolzen (13) sich im Gegensatz zum anodischen Potential der Andruckplatte (10) auf Massenpotential entsprechend dem kathodischem Potential der Kathode (5) befindet.

4. Elektrolysezelle nach Anspruch 1, 2 oder 3,
**dadurch gekennzeichnet, daß**
die Stromzuführung (18) zur Anode (9) über ein Stromkabel (34) erfolgt, welches über eine Durchgangsbohrung (35) und Abdichtung (12) durch die Zellgehäusewandung (24,24') in das Zellgehäuse geführt ist und mit seinem äußeren, die Elektrodenandruckplatte (10) der Anode kontaktierenden Ende gegen die Elektrodenandruckplatte (10) festgelegt ist.

5. Elektrolysezelle nach Anspruch 4,
**dadurch gekennzeichnet, daß**
der elektrische Leiter (36) des Endes des Stromkabels (34) in ein plattenförmiges in die Sackbohrung (33) einschiebbares flächiges Kontaktstück (37) übergeht.

6. Elektrolysezelle nach Anspruch 5,
**dadurch gekennzeichnet, daß**
das Kontaktstück (37) auf seiner Vorderseite eine plane Kontaktfläche (38) besitzt und die Sackbohrung (33) an ihrem Ende eine plane Stirnseite (39) zur flächenmäßigen Kontaktierung der Kontaktfläche (38) des Kontaktstückes (37).

7. Elektrolysezelle nach einem der Ansprüche 4 - 6,
**dadurch gekennzeichnet, daß**
das Ende des Stromkabels (34) und/oder das an dem dortigen Ende angelegte Kontaktstück (37) durch eine in der Sackbohrung (33) verschraubbare Gewindebuchse (11), welche zur Durchführung des Stromkabels (34) eine Längsdurchführung (41) aufweist, gegen die Stirnseite (38) der Sackbohrung (33) festlegbar ist.

8. Elektrolysezelle nach einem der Ansprüche 4 - 7,
**dadurch gekennzeichnet, daß**
die Abdichtung des Stromkabels in der Durchgangsbohrung (35) über eine in einem dortigen äußeren Gewindeabschnitt einschraubbare Abdichtschraube (12) erfolgt.

9. Elektrolysezelle nach einem Ansprüche 4 - 8,
**dadurch gekennzeichnet, daß**
zum äußeren Schutz des Stromkabels (34) dieses eine PVC-Ummantelung aufweist, auf die eine äußere Teflonisolierung (17) aufgebracht ist, oder daß das Stromkabel (34) gänzlich eine elektrische Teflonisolierung als äußere Ummantelung aufweist.

10. Elektrolysezelle nach Anspruch 9,
**dadurch gekennzeichnet, daß**
die Teflonisolierung (17) bis in die Sackbohrung (33) der Elektrodenandruckplatte (10) durch die Elektrolysezelle geführt ist.

11. Elektrolysezelle nach einem der Ansprüche 4 - 10,
**dadurch gekennzeichnet, daß**
in der Sackbohrung (33) der Elektrodenandruckplatte (10) auf der Kabelummantelung oder deren zusätzlicher äußerer Teflonisolierung zumindest eine das Ende des Stromkabels (34) und die dortige Stromkontaktierung der Elektrodenandruckplatte (10) schützende Abdichtung (42) angelegt ist.

12. Elektrolysezelle nach Anspruch 11,
**dadurch gekennzeichnet, daß**
die Abdichtung (42) am Ende des Stromkabels (34) als Dichtring ausgebildet ist, welcher in der Sackbohrung (33) gegen einen nach außen radial vorstehenden Endabschnitt (43) der Kabelummantelung bzw. der äußeren Teflonisolierung anpreßbar ist, welcher mit der anderen Seite gegen die Rückseite des äußeren radial vorstehenden Kontaktstückes (37) des Leiters (36) des Stromkabels gelagert ist.

13. Elektrolysezelle nach einem der Ansprüche 5 - 12,
**dadurch gekennzeichnet, daß**
als Kontaktstück (37) am Leiterende des Stromkabels (34) ein Messingring oder eine kreisförmige Platte mit einer Durchgangsbohrung zur Durchführung des Leiterendes mit einer sich weitenden äußeren Ausnehmung (44) zum Festlöten des Leiterendes angelegt ist.

14. Elektrolysezelle nach einem der Ansprüche 1 - 13,
**dadurch gekennzeichnet, daß**
der Wasserzufluß (15) für vollentsalztes Wasser zum Anodenraum und der Ablauf(16) von Wasser, Sauerstoff und Ozon aus diesem mindestens ein Anschlußstück (20) für eine Zuführungsleitung oder Abführungsleitung aufweist.

15. Elektrolysezelle nach Anspruch 14,
**dadurch gekennzeichnet, daß**
als Anschlußstück eine Rohrverschraubung (20) zur Festlegung und Abdichtung einer Zuführungs- oder Abführungsleitung angelegt ist.

16. Elektrolysezelle nach einem der Ansprüche 1 - 15,
**dadurch gekennzeichnet, daß**
das Zentrier- und Andrucklager (30) für den Andruckbolzen (19) in Form eines Isolationskörpers (6) ausgebildet ist oder als metallisches Lager gegenüber der Elektrodenandruckplatte in einer Isolationsschicht eingebettet ist.

17. Elektrolysezelle nach Anspruch 16,
**dadurch gekennzeichnet , daß**
die die Rückseiten der die Elektroden (5,9) andrückenden Zellenteile (4,10,25,32) mit einem zur Wasserverteilung und zum Abfangen von sich bildendem Gas dienenden Kanalnetz ganz oder teilweise ausgestattet sind.

18. Elektrolysezelle nach einem der Ansprüche 1 - 17,
**dadurch gekennzeichnet, daß**
seitlich zur Lagerung der Kathode (5) auf der Gegenlagerung (25) in einer parallelen Ebene zur Feststoffelektrolytmembran (8) ein oder mehrere flächige Streckmetallnetze oder -bleche (4) vorgesehen sind, welche den zwischen Kathode (5) und der angrenzenden Zellgehäuseinnenwandung (32) gebildeten Kathodenraum (5') ganz oder teilweise ausfüllen.

19. Elektrolysezelle nach Anspruch 18,
**dadurch gekennzeichnet , daß**
die Streckmetallbleche (4) aus einem Titanblech mit rechteckigen oder rautenförmigen Öffnungen und gitterförmig vorspringender Rasterung bestehen.

20. Elektrolysezelle nach einem der Ansprüche 1 - 19,
**dadurch gekennzeichnet, daß**
die Kathode (5) aus gesinterter Bronze besteht.

21. Elektrolysezelle nach einem der Ansprüche 1 - 17,
**dadurch gekennzeichnet, daß**
unter Bildung eines elastischen Elektrodenmaterials die Kathode (5) aus einem elektrisch leitfähigen Kohlenstoff-Fasermaterial besteht.

22. Elektrolysezelle nach Anspruch 21,
**dadurch gekennzeichnet, daß**
das Kohlenstoff-Fasermaterial aus einem in Form von Filzen und Flocken (Wolle) durch Carbonisieren natürlicher und synthetischer Faser hergestellten Material besteht.

23. Elektrolysezelle nach Anspruch 21 oder 22,
**dadurch gekennzeichnet, daß**
das Kohlenstoff-Fasermaterial einen geringen ohmschen Widerstand aufweist, dagegen einen hohen induktiven Widerstand, so daß eine Ankopplung in einem induktiven Feld erst über 12 kHz erfolgt.

24. Elektrolyszelle nach einem der Ansprüche 21 - 23,
**dadurch gekennzeichnet, daß**
das Kohlenstoff-Fasermaterial als cabonisierter und graphitierter Filz auf PAN-Faser-Basis hergestellt ist.

25. Elektrolysezelle nach Anspruch 24,
**dadurch gekennzeichnet, daß**
das Kohlenstoff-Fasermaterial ein Flächengewicht von 320 g/m², eine Rohdichte von 0,1 g/m³, eine Dicke von 2,5 - 3,0 mm und einen spezifisch elektrischen Widerstand in Längs- und Querrichtung von 1,5 Ohm aufweist.

26. Elektrolysezelle nach Anspruch 24 oder 25,
**dadurch gekennzeichnet, daß**
die Wärmeleitfähigkeit 0,06 W/mK bei 30° C beträgt.

27. Elektrolysezelle nach einem der Ansprüche 1 - 26,
**dadurch gekennzeichnet, daß**
die Anode (9) aus einer gesinterten Titanschicht mit einer äußeren PbO₂ Beschichtung besteht.

28. Elektrolyezelle nach einem der Ansprüche 1 - 27,
**dadurch gekennzeichnet, daß**
die Anode (9) als poröse Elektrode ausgebildet, wobei die Elektrodenoberfläche mit einer Oxidationskatalysatorbeschichtung versehen ist.

29. Elektrolysezelle nach Anspruch 28,
**dadurch gekennzeichnet, daß**
eine poröse aufgalvanisierte Oxidationskatalysatorbeschichtung angelegt ist.

30. Elektrolysezelle nach einem der Ansprüche 1 - 28,
**dadurch gekennzeichnet, daß**
poröse. Elektroden gegenüber einer perfluorierten Kationenaustauschermembran (8) angelegt sind, welche mit einem Elektrokatalysator galvanisch beschichtet oder in Form eines pulverförmig aufgebrachten Films versehen ist.

31. Elektrolysezelle nach einem der Ansprüche 1 - 30,
**dadurch gekennzeichnet, daß**
diese als Feststoffelektrolytmembran (8) eine auf der Basis perfluorierter Sulfosäuren aufgebaute Kationenaustauschermembran aufweist.

32. Elektrolysezelle nach einem der Ansprüche 1 - 31,
**dadurch gekennzeichnet, daß**
der Anodenraum (9') ohne freien Wasserdurchfluß lediglich mit einem Wasserzufluß (15) und einem Wasserablauf (16) für vollentsalztes Wasser versehen ist, während in dem von dem Anodenraum (9') durch die Feststoffelektrolytmembran (8) getrennten Kathodenraum (5') lediglich ein Ausgang (2) für Wasser und Wasserstoff angelegt ist.

33. Elektrolysezelle nach Anspruch 32,
**dadurch gekennzeichnet, daß**
der Ausgang (2) zur Abführung von Wasserstoff und Wasser ein Anschlußstück für eine Abführungsleitung aufweist und daß Einrichtungen zum Abgeben des entstandenen Ozons mit dem überschüssigen vollentsalzten Wasser an das zu behandelnde oder anzureichernde, eine höhere Leitfähigkeit besitzende Medium vorgesehen sind.

34. Elektrolysezelle nach Anspruch 33,
**dadurch gekennzeichnet, daß**
die Zellgehäuseschale (1) der Kathodenseite mit zumindest einer sich bis zum Ausgang (2) des Kathodenraumes (5') erstreckenden Ausnehmung (46,47) versehen ist, in welche die Gegenlagerung (25) für die Kathode (5) angelegt und/oder das oder die Streckmetallbleche (4), sich zumindest bis zur Höhe des Ausganges (2) des Kathodenraumes erstreckend, eingebracht sind.

35. Elektrolysezelle nach Anspruch 33,
**dadurch gekennzeichnet, daß**
die Ausnehmung (46) für die Kathode (5) und/oder die Steckmetallbleche (4) zur Zellgehäuseinnenwandung (32) der Kathodenseite in eine Fortsetzung (47) übergeht, deren Durchmesser geringer als die Querschnittsabmessung der Kathode (5) oder des oder der Streckmetallbleche (4) ist, so daß sich seitlich der Kathode (5) und/oder des oder der Streckmetallbleche (4) ein freier Kathodenraumabschnitt ergibt.

36. Verwendung der Elektrolysezelle nach Anspruch 1 - 35 als Tauchzelle zur Aufarbeitung von Brauch- und Abwasser und anderen industriellen oxidierbaren Flüssigkeiten mit einem Leitwert größer als 20 µS/cm durch unmittelbare Ozoneinleitung in dieses.

## Claims

1. Electrolytic cell, in particular for generating ozone,
having a solid electrolyte membrane (8), which separates the anode and cathode compartments (9', 5') from one another and of which the anodic and/or cathodic side comprises at least one electrode (5), which comprises an at least partially water-permeable or wettable structure made of electrically conductive material and alignable in a planar manner, and/or a planar, at least partially porous electrode (9), in particular comprising a sintered or non-porous carrier formed by a metal conductor and one or more electrically conductive coatings, wherein the anode and cathode electrodes (5, 9) are in surface contact with the solid electrolyte membrane (8), the outer anode surface for producing ozone is activated with a large overvoltage, the cell housing has in a cell housing wall (24) an electrically insulated current bushing (18') for a current supply (18) to one of the electrodes (9) and comprises at least two cell housing shells (1, 14), which are mutually sealed, wherein one cell housing shell (1) at least partially encloses the cathodic side and the other cell housing shell (14) at least partially encloses the anodic side and the solid electrolyte membrane (8) is clamped in between the mutually adjacent end faces, designed as sealing surfaces, of the cell housing shells (1, 14) and the adjustment of the surface pressure of the two electrodes (5, 9) upon the solid electrolyte membrane (8) is effected, independently of the adjustment of the sealing pressure of the cell housing shells (1, 14), by means of a setting and guiding device (13, 13'), which extends through the cell housing wall (24) to the anode compartment (9'), and an externally actuable pressing apparatus (10, 13), wherein the end portion (28) of a pressing bolt (13), which extends through the cell housing wall (24), is in engagement with a centring and pressing bearing (30), which is disposed centrally at the rear side (29) of an adjustable electrode pressing plate (10),
thereby effecting the centring and/or swivelling of the anode (9), which is mounted on the outer end face (31) of the electrode pressing plate (10), transversely of the axis of adjustment of the pressing bolt (13) in a parallel plane to the solid electrolyte membrane (8),
wherein the pressing bolt (13) extending outwards through the cell housing wall (24) is mounted adjustably by means of the setting and guiding device (13, 13') in a longitudinal guide of a guide bearing (13') and the cathode (5), which lies opposite the electrode (9) applied in the anode compartment (9') against the electrode pressing plate (10), is aligned, with simultaneous formation of a cathode compartment (5') laterally of the inner wall (32) of the cell housing, with a thrust bearing arrangement (25) likewise in a parallel plane to the solid electrolyte membrane (8) and is arranged so as to be pressed with simultaneous electrical contacting against the latter,
**characterized in that**
the electric current bushing (18') for the current supply (18) to the anode (9) is situated in the cell housing wall (24) separately from, and laterally alongside, the pressing bolt (13) and that the current supply (18) is conducted further, with simultaneous sealing and electrical insulation relative to the cell housing wall (24) and the outer region of the cell as well as with simultaneous formation of a current connection inside the cell housing with contacting of the electrode pressing plate (10) used as carrier and connection of the anode (9), at least through the interior of the anode compartment (9') in an electrically insulated manner as far as the electrode pressing plate (10) and that the pressing bolt (13), with its end portion (28) against the centring and pressing bearing (30) centrally at the rear side (29) of the electrode pressing plate (10), is electrically insulated relative to the latter, wherein the interior of the anode compartment (9') of the cell is filled with totally desalted water (electrical conductance lower than 20 µS/cm) and hence electrode pressing plate (10) and/or anode (9) are electrically insulated from the cell housing shells (1, 14) and the pressing bolt (13).

2. Electrolytic cell according to claim 1,
**characterized in that**
the current supply (18) having external electrical insulation as a protection against surrounding liquid is conducted as far as into a blind hole (33), which opens towards the outer side of the electrode pressing plate (10), for contacting there.

3. Electrolytic cell according to claim 1 or 2,
**characterized in that**
the cell housing (1, 14) is made of an electrically conductive material and that the cathode (5) is electrically connected to the cell inner wall (32) adjoining the cathode compartment (5'), so that the cell housing during operation of the electrolytic cell lies at cathode potential of an electrical cell housing connection (23), and that the pressing bolt (13) lies, in contrast to the anode potential of the pressing plate (10), at frame potential in accordance with the cathode potential of the cathode (5).

4. Electrolytic cell according to claim 1, 2 or 3,
**characterized in that**
the current supply (18) to the anode (9) is effected via a current cable (34), which extends via a through-bore (35) and seal (12) through the cell housing wall (24, 24') into the cell housing and is fastened by its outer end, which contacts the electrode pressing plate (10) of the anode, against the electrode pressing plate (10).

5. Electrolytic cell according to claim 4,
**characterized in that**
the electric conductor (36) of the end of the current cable (34) changes into a plate-shaped two-dimensional contact piece (37), which is insertable into the blind hole (33).

6. Electrolytic cell according to claim 5,
**characterized in that**
the contact piece (37) on its front side has a flat contact surface (38) and the blind hole (33) at its end has a flat end face (39) for surface contacting the contact surface (38) of the contact piece (37).

7. Electrolytic cell according to one of claims 4 - 6,
**characterized in that**
the end of the current cable (34) and/or the contact piece (37) situated on said end is fastenable against the end face (38) of the blind hole (33) by means of a threaded bush (11), which is screwable in the blind hole (33) and comprises a longitudinal bushing (41) for penetration of the current cable (34).

8. Electrolytic cell according to one of claims 4 - 7,
**characterized in that**
the sealing of the current cable in the through-bore (35) is effected by means of a sealing screw (12), which is screwable in an outer threaded portion there.

9. Electrolytic cell according to one claims 4 - 8,
**characterized in that**
the current cable (34) for external protection has a PVC coating, onto which external Teflon insulation (17) is applied, or that the entire current cable (34) has Teflon electrical insulation as an outer coating.

10. Electrolytic cell according to claim 9,
**characterized in that**
the Teflon insulation (17) extends through the electrolytic cell as far as into the blind hole (33) of the electrode pressing plate (10).

11. Electrolytic cell according to one of claims 4 - 10,
**characterized in that**
in the blind hole (33) of the electrode pressing plate (10) at least one seal (42) is situated on the cable coating or on the latter's additional external Teflon insulation and protects the end of the current cable (34) and the current contacting of the electrode pressing plate (10) effected there.

12. Electrolytic cell according to claim 11,
**characterized in that**
the seal (42) on the end of the current cable (34) takes the form of a sealing ring, which in the blind hole (33) is pressable against a radially outwardly projecting end portion (43) of the cable coating or of the external Teflon insulation, which is supported by the other side against the rear side of the outer radially projecting contact piece (37) of the conductor (36) of the current cable.

13. Electrolytic cell according to one of claims 5 - 12,
**characterized in that**
disposed as contact piece (37) on the conductor end of the current cable (34) is a brass ring or an annular plate having, for penetration of the conductor end, a through-bore with a widening outer recess (44) for fastening of the conductor end by soldering.

14. Electrolytic cell according to one of claims 1 - 13,
**characterized in that**
the water inlet (15) for totally desalted water to the anode compartment and the outlet (16) for water, oxygen and ozone from the latter comprises at least one connection piece (20) for a supply line or discharge line.

15. Electrolytic cell according to claim 14,
**characterized in that**
as a connection piece a screwed pipe connection (20) for fastening and sealing a supply and/or discharge line is provided.

16. Electrolytic cell according to one of claims 1 - 15,
**characterized in that**
the centring and pressing bearing (30) for the pressing bolt (19) takes the form of an insulating body (6) or is embedded as a metal bearing in an insulation layer opposite the electrode pressing plate.

17. Electrolytic cell according to claim 16,
**characterized in that**
the the [sic] rear sides of the cell parts (4, 10, 25, 32) pressing against the electrodes (5, 9) are equipped in whole or in part with a channel network used for water distribution and for collecting gas which builds up.

18. Electrolytic cell according to one of claims 1 - 17,
**characterized in that**
provided laterally relative to the bearing arrangement of the cathode (5) on the thrust bearing arrangement (25) in a parallel plane to the solid electrolyte membrane (8) are one or more planar expanded metal grids or plates (4), which totally or partially fill the cathode compartment (5') formed between cathode (5) and the adjoining cell housing inner wall (32).

19. Electrolytic cell according to claim 18,
**characterized in that**
the expanded metal sheets (4) are made from a titanium sheet having rectangular or diamond-shaped openings and embossing, which projects in a latticed manner.

20. Electrolytic cell according to one of claims 1 - 19,
**characterized in that**
the cathode (5) is made of sintered bronze.

21. Electrolytic cell according to one of claims 1 - 17,
**characterized in that**
the cathode (5) is made from an electrically conductive carbon fibre material so as to form an elastic electrode material.

22. Electrolytic cell according to claim 21,
**characterized in that**
the carbon fibre material comprises a material produced in the form of felts and flocks (wool) by carbonizing natural and man-made fibres.

23. Electrolytic cell according to claim 21 or 22,
**characterized in that**
the carbon fibre material has a low ohmic resistance but a high inductive reactance so that a coupling in an inductive field occurs only above 12 kHz.

24. Electrolytic cell according to one of claims 21 - 23,
**characterized in that**
the carbon fibre material is manufactured as carbonized and graphitized felt on a PAN fibre base.

25. Electrolytic cell according to claim 24,
**characterized in that**
the carbon fibre material has a mass per unit area of 320 g/m², a bulk density of 0.1 g/m³, a thickness of 2.5 - 3.0 mm and an electrical resistivity in longitudinal and transverse direction of 1.5 ohms.

26. Electrolytic cell according to claim 24 or 25,
**characterized in that**
the thermal conductivity is 0.06 W/mK at 30°C.

27. Electrolytic cell according to one of claims 1 - 26,
**characterized in that**
the anode (9) comprises a sintered titanium layer with an external PbO₂ coating.

28. Electrolytic cell according to one of claims 1 - 27,
**characterized in that**
the anode (9) takes the form of a porous electrode, wherein the electrode surface is provided with an oxidation catalyst coating.

29. Electrolytic cell according to claim 28,
**characterized in that**
a porous electroplated oxidation catalyst coating is provided.

30. Electrolytic cell according to one of claims 1 - 28,
**characterized in that**
porous electrodes are situated opposite a perfluorinated cation-exchange membrane (8), which is electroplated with an electrocatalyst or is provided in the form of a film applied in powder form.

31. Electrolytic cell according to one of claims 1 - 30,
**characterized in that**
it has, as a solid electrolyte membrane (8), a cation-exchange membrane built up on the base of perfluorinated sulphonic acids.

32. Electrolytic cell according to one of claims 1 - 31,
**characterized in that**
the anode compartment (9') with no free water throughflow is provided only with a water inlet (15) and a water outlet (16) for totally desalted water, while in the cathode compartment (5'), which is separated from the anode compartment (9') by the solid electrolyte membrane (8), only an outlet (2) for water and hydrogen is provided.

33. Electrolytic cell according to claim 32,
**characterized in that**
the outlet (2) for the discharge of hydrogen and water comprises a connection piece for a discharge line and that devices are provided for transferring the generated ozone plus the surplus totally desalted water to the medium of higher conductivity, which is to be treated or enriched.

34. Electrolytic cell according to claim 33,
**characterized in that**
the cell housing shell (1) of the cathodic side is provided with at least one recess (46, 47), which extends as far as the outlet (2) of the cathode compartment (5') and into which the thrust bearing arrangement (25) for the cathode (5) is placed and/or the expanded metal plate or plates (4), which extend at least up to the height of the outlet (2) of the cathode compartment, are introduced.

35. Electrolytic cell according to claim 33,
**characterized in that**
the recess (46) for the cathode (5) and/or the expanded metal plates (4) changes, towards the cell housing inner wall (32) of the cathodic side, into a continuation (47), the diameter of which is smaller than the cross-sectional dimension of the cathode (5) or of the expended metal plate or plates (4), with the result that a free cathode compartment portion arises laterally of the cathode (5) and/or of the expanded metal plate or plates (4).

36. Use of the electrolytic cell according to claim 1 - 35 as an immersion cell for the treatment of industrial and waste water and other industrial oxidizable liquids with an electrical conductance greater than 20 µS/cm through the direct introduction of ozone therein. the direct introduction of ozone therein.

## Revendications

1. Cellule d'électrolyse, en particulier pour la génération d'ozone, comprenant une membrane électrolytique en matière solide (8) séparant le compartiment anodique et le compartiment cathodique (9', 5') l'un de l'autre, dont le côté anodique et/ou le côté cathodique présente au moins une électrode (5) constituée d'une matière électriquement conductrice possédant une structure apte à s'étendre en position plane, au moins en partie perméable à l'eau ou apte à être humidifiée et/ou une électrode plane (9) au moins en partie poreuse, en particulier constituée par un support fritté ou non poreux constitué par un conducteur métallique et par une ou plusieurs enductions électriquement conductrices, dans laquelle les électrodes (5, 9) faisant office d'anode et de cathode entrent en contact sur toute leur surface avec la membrane électrolytique (8) en matière solide, la surface anodique externe est activée, en cas de surtension, pour la génération d'ozone, le logement cellulaire présente, dans une paroi (24) du logement cellulaire, un conduit du courant (18') isolé du point de vue électrique et est constitué par au moins deux enveloppes de logement cellulaire (1, 14) qui manifeste une étanchéité réciproque, dans laquelle une enveloppe (1) du logement cellulaire renferme le côté cathodique et l'autre enveloppe (14) du logement cellulaire renferme au moins en partie le côté anodique et la membrane électrolytique (8) en matière solide est enserrée entre les surfaces frontales des enveloppes (1, 14) du logement cellulaire, et le réglage de la pression surfacique exercée par les deux électrodes (5, 9) sur la membrane électrolytique (8) en matière solide a lieu, indépendamment du réglage de la pression d'étanchéisation des enveloppes (1, 14) du logement cellulaire, via un mécanisme de réglage et de guidage (13, 13') guidé en direction du compartiment anodique (9') à travers la paroi (24) du logement cellulaire et via un dispositif de pression (10, 13) qui peut être actionné de l'extérieur, dans laquelle la section terminale (28) d'un boulon de pression (13) guidé à travers la paroi (24) du logement cellulaire entre en engrènement avec un palier à joues et de pression (30) appliqué en position centrale sur le côté dorsal (29) d'une plaque de pression d'électrode réglable (10), le centrage et/ou le pivotement de l'anode montée sur le côté frontal externe (31) de la plaque de pression d'électrode (10) ayant lieu en position transversale par rapport à l'axe de réglage du boulon de pression (13) dans un plan parallèle à la membrane électrolytique (8) en matière solide, dans laquelle le boulon de pression (13) guidé vers l'extérieur à travers la paroi (24) du logement cellulaire est monté de manière réglable à l'aide du mécanisme d.e réglage et de guidage (13, 13') dans un guidage longitudinal d'un palier de guidage (13') et la cathode (5) qui est opposée à l'électrode (9) appliquée contre la plaque de pression d'électrode (10) dans le compartiment anodique (9'), en formant un compartiment cathodique (5') en position latérale par rapport à la paroi interne (32) du logement cellulaire, s'étend sur une butée (25) également dans un plan parallèle à la membrane électrolytique (8) en matière solide et est disposée en étant pressée contre ladite membrane pour obtenir une mise en contact électrique, **caractérisée en ce que** le passage du courant électrique (18') destiné à l'alimentation en courant (18) de l'anode (9) vient s'appliquer, à l'écart du boulon de pression (13), en position latérale à côté de ce dernier et **en ce que** l'alimentation en courant (18) est guidée ultérieurement, dans des conditions d'étanchéité et dans des conditions d'isolation électrique vis-à-vis de la paroi 24 du logement cellulaire et de la zone externe de la cellule, et en formant un raccordement électrique à l'intérieur du logement cellulaire par la mise en contact de la plaque de pression d'électrode (10) utilisée comme support et comme raccord à l'anode (9), jusqu'à ladite plaque de pression, au moins à travers l'intérieur du compartiment anodique (9') dans des conditions d'isolation électrique et **en ce que** le boulon de pression (13) guidé avec sa section terminale (28) contre la butée de centrage et de pression (30) en position centrale sur le côté dorsal (29) de la plaque de pression d'électrode (10) est isolé électriquement vis-à-vis de ladite plaque de pression, dans lequel l'intérieur du compartiment anodique (9') de la cellule est rempli avec de l'eau déminéralisée (conductance inférieure à 20 µS/cm) de telle sorte que la plaque de pression d'électrode (10) et/ou l'anode (9) sont isolées électriquement vis-à-vis des enveloppes de logement cellulaire (1, 14) et vis-à-vis du boulon de pression (13).

2. Cellule d'électrolyse selon la revendication 1, **caractérisée en ce que** le passage de courant 18 est guidé avec une isolation électrique externe et procurant une protection contre le liquide environnant jusque dans un alésage borgne (33) s'ouvrant sur le côté externe de la plaque de pression d'électrode (10) à des fins de mise en contact à cet endroit.

3. Cellule d'électrolyse selon la revendication 1 ou 2, **caractérisée en ce que** le logement cellulaire (1, 14) est constitué d'un matériau électriquement conducteur et **en ce que** la cathode (5) est reliée électriquement à la paroi interne (32) du logement cellulaire adjacente au compartiment cathodique (5') de telle sorte que le logement cellulaire, lors de la mise en service de la cellule d'électrolyse, est soumis au potentiel cathodique d'un raccord électrique (23) du logement cellulaire, et **en ce que** le boulon de pression (13) est soumis, contrairement au potentiel anodique de la plaque de pression (10), au potentiel de masse correspondant au potentiel cathodique de la cathode (5).

4. Cellule d'électrolyse selon la revendication 1, 2 ou 3, **caractérisée en ce que** le passage de courant (18) en direction de l'anode (9) a lieu via un câble d'alimentation (34) qui est guidé dans le logement cellulaire, via un alésage traversant (35) et via un joint d'étanchéité (12) à travers la paroi de logement cellulaire (24, 24'), et qui est fixé, contre la plaque de pression d'électrode (10), avec son extrémité externe entrant en contact avec la plaque de pression d'électrode (10) de l'anode.

5. Cellule d'électrolyse selon la revendication 4, **caractérisée en ce que** le conducteur électrique (36) de l'extrémité du câble d'alimentation (34) se transforme en un élément de contact en nappe (37) apte à venir s'insérer en forme de plaque dans l'alésage borgne (33).

6. Cellule d'électrolyse selon la revendication 5, **caractérisée en ce que** l'élément de contact (37) possède, sur son côté frontal, une surface de contact plane (38) et l'alésage borgne (33) possède, à son extrémité, un côté frontal plan (39) pour la mise en contact de type superficiel avec la surface de contact (38) de l'élément de contact (37).

7. Cellule d'électrolyse selon l'une quelconque des revendications 4 à 6, **caractérisée en ce que** l'extrémité du câble d'alimentation (34) et/ou l'élément de contact (37) qui vient s'appliquer sur ladite extrémité peut venir se fixer contre le côté frontal (38) de l'alésage borgne (33) via une douille filetée (11) apte à être vissée dans l'alésage borgne (33), douille qui présente un guidage longitudinal (41) pour le passage du câble d'alimentation (34).

8. Cellule d'électrolyse selon l'une quelconque des revendications 4 à 7, **caractérisée en ce que** l'étanchéisation du câble d'alimentation dans l'alésage traversant (35) a lieu via une vis d'étanchéisation (12) apte à être vissée dans une section externe à filet de vis se trouvant à cet endroit.

9. Cellule d'électrolyse selon l'une quelconque des revendications 4 à 8, **caractérisée en ce que**, pour la protection externe du câble d'alimentation (34), ce dernier présente un recouvrement en PVC sur lequel vient s'appliquer une isolation externe en Téflon (17), ou **en ce que** le câble d'alimentation (34) présente dans sa totalité une isolation électrique en Téflon à titre de recouvrement externe.

10. Cellule d'électrolyse selon la revendication 9, **caractérisée en ce que** l'isolation en Téflon (17) est guidée jusque dans l'alésage borgne (33) de la plaque de pression d'électrode (10) à travers la cellule d'électrolyse.

11. Cellule d'électrolyse selon l'une quelconque des revendications 4 à 10, **caractérisée en ce que**, dans l'alésage borgne (33) de la plaque de pression d'électrode (10), sur le recouvrement de câble ou sur son isolation externe supplémentaire en Téflon, vient s'appliquer au moins un joint d'étanchéité (42) qui protège l'extrémité du câble d'alimentation (34) et la mise en contact électrique à cet endroit de la plaque de pression d'électrode (10).

12. Cellule d'électrolyse selon la revendication 11, **caractérisée en ce que** le joint d'étanchéité (42) à l'extrémité du câble d'alimentation (34) est réalisé sous la forme d'un anneau d'étanchéité qui peut être pressé dans l'alésage borgne (33) contre une section terminale (43), faisant saillie en direction radiale vers l'extérieur, du recouvrement de câble, respectivement de l'isolation externe en Téflon, et qui est monté, avec l'autre côté, contre le côté dorsal de l'élément de contact (37) du conducteur (36) du câble d'alimentation, faisant saillie vers l'extérieur en direction radiale.

13. Cellule d'électrolyse selon l'une quelconque des revendications 5 à 12, **caractérisée en ce qu'**on applique, à titre d'élément de contact (37), sur l'extrémité conductrice du câble d'alimentation (34), un anneau en laiton ou une plaque circulaire. comprenant un alésage traversant pour le passage de l'extrémité conductrice, qui présente un évidement externe (44) qui s'élargit pour la fixation par brasage de l'extrémité conductrice.

14. Cellule d'électrolyse selon l'une quelconque des revendications 1 à 13, **caractérisée en ce que** l'amenée d'eau (15) pour de l'eau déminéralisée en direction du compartiment anodique et l'évacuation (16) de l'eau, de l'oxygène et de l'ozone à partir dudit compartiment, présentent au moins un raccord (20) pour une conduite d'amenée ou pour une conduite d'évacuation.

15. Cellule d'électrolyse selon la revendication 14, **caractérisée en ce que**, à titre de raccord, on dispose un raccord à vis tubulaire (20) pour la fixation et l'étanchéisation d'un conduit d'amenée ou d'évacuation.

16. Cellule d'électrolyse selon le quelconque des revendications 1 à 15, **caractérisée en ce que** le palier à joues et de pression (30) destiné au boulon de pression (19) est réalisé sous la forme d'un corps d'isolation (6) ou être incorporé, sous la forme d'un palier métallique, dans une couche d'isolation vis-à-vis de la plaque de pression d'électrode.

17. Cellule d'électrolyse selon la revendication 16, **caractérisée en ce que**, les côtés dorsaux des éléments de cellule (4, 10, 25, 32) s'appuyant contre les électrodes (5, 9) sont équipés en tout en partie d'un réseau de canaux servant à la distribution de l'eau ou au captage du gaz qui se forme.

18. Cellule d'électrolyse selon l'une quelconque des revendications 1 à 17, **caractérisée en ce que**, en position latérale au palier de la cathode (5), sur la butée (25), dans un plan parallèle à la membrane électrolytique en matière solide (8), on prévoit un ou plusieurs treillis ou tôles en métal déployé (4) disposés en nappes, qui remplissent en tout ou en partie le compartiment cathodique (5') formé entre la cathode (5) et la paroi interne limitrophe (32) du logement cellulaire.

19. Cellule d'électrolyse selon la revendication 18, **caractérisée en ce que** les tôles (4) en métal déployé sont constituées par une tôle en titane comprenant des ouvertures rectangulaires ou en forme de losange et par un dispositif d'encliquetage faisant saillie en forme de grille.

20. Cellule d'électrolyse selon l'une quelconque des revendications 1 à 19, **caractérisée en ce que** la cathode (5) est constituée de bronze fritté.

21. Cellule d'électrolyse selon l'une quelconque des revendications 1 à 17, **caractérisée en ce que**, en formant une matière d'électrode élastique, la cathode (5) est constituée d'une matière à base de fibres de carbone électriquement conductrice.

22. Cellule d'électrolyse selon la revendication 21, **caractérisée en ce que** la matière à base de fibres de carbone est constituée par une matière en forme de feutre et de flocons (laine), fabriquée par carbonisation de fibres naturelles et synthétiques.

23. Cellule d'électrolyse selon la revendication 21 ou 22, **caractérisée en ce que** la matière à base de fibres de carbone présente une faible résistance ohmique, mais une résistance inductive élevée, si bien qu'un accouplement dans un champ inductif n'a lieu qu'au-delà de 12 kHz.

24. Cellule d'électrolyse selon l'une quelconque des revendications 21 à 23, **caractérisée en ce que** la matière à base de fibres de carbone est réalisée sous la forme d'un feutre carbonisé et graphité à base de fibres PAN.

25. Cellule d'électrolyse selon la revendication 24, **caractérisée en ce que** la matière à base de fibres de carbone présente un poids surfacique de 320 g/m², une masse volumique apparente de 0,1 g/m³, une épaisseur de 2,5 à 3,0 mm et une résistance électrique spécifique en direction longitudinale et en direction transversale de 1,5 ohm.

26. Cellule d'électrolyse selon la revendication 24 ou 25, **caractérisée en ce que** la conductibilité thermique s'élève à 0,06 W/mK à 30 °C.

27. Cellule d'électrolyse selon l'une quelconque des revendications 1 à 26, **caractérisée en ce que** l'anode (9) est constituée par une couche de titane fritté comprenant une enduction externe en PbO₂.

28. Cellule d'électrolyse selon l'une quelconque des revendications 1 à 27, **caractérisée en ce que** l'anode (9) est réalisée sous la forme d'une électrode poreuse, la surface d'électrode étant munie d'une enduction de catalyseur d'oxydation.

29. Cellule d'électrolyse selon la revendication 28, **caractérisée en ce qu'**on applique une enduction de catalyseur d'oxydation poreuse appliquée par galvanisation.

30. Cellule d'électrolyse selon l'une quelconque des revendications 1 à 28, **caractérisée en ce qu'**on applique des électrodes poreuses face à une membrane perfluorée (8) échangeuse de cations qui a été enduite par galvanisation avec un électrocatalyseur d'eau qui est réalisé sous la forme d'un film qui a été appliqué sous une forme pulvérulente.

31. Cellule d'électrolyse selon l'une quelconque des revendications 1 à 30, **caractérisée en ce qu'**elle présente, à titre de membrane électrolytique en matière solide (8), une membrane échangeuse de cations dont la structure est à base d'acides sulfoniques perfluorés.

32. Cellule d'électrolyse selon l'une quelconque des revendications 1 à 31, **caractérisée en ce que** le compartiment anodique (9'), en l'absence d'un passage libre d'eau, est muni uniquement d'une amenée d'eau (15) et d'une évacuation d'eau (16) pour de l'eau déminéralisée, tandis que, dans le compartiment cathodique (5') séparé du compartiment anodique (9') par la membrane électrolytique en matière solide (8), on applique uniquement une sortie (2) pour l'eau et l'hydrogène.

33. Cellule d'électrolyse selon la revendication 32, **caractérisée en ce que** la sortie (2) pour l'évacuation de l'hydrogène et de l'eau, présente un élément de raccordement pour un conduit d'évacuation et **en ce qu'**on prévoit des mécanismes pour la distribution de l'ozone obtenue avec l'eau déminéralisée en excès au milieu qui doit être traité ou qui doit être enrichi, possédant une conductibilité supérieure.

34. Cellule d'électrolyse selon la revendication 33, **caractérisée en ce que** l'enveloppe (1) du logement cellulaire du côté de la cathode est munie d'au moins un évidement (46, 47) s'étendant jusqu'à la sortie (2) du compartiment cathodique (5'), dans lequel est appliquée la butée (25) pour la cathode (5) et/ou dans lequel viennent s'insérer la ou tôles en métal déployé (4) en s'étendant au moins jusqu'à la hauteur de la sortie (2).

35. Cellule d'électrolyse selon la revendication 33, **caractérisée en ce que** l'évidement (46) pour la cathode (5) et/ou la tôle en métal déployé (4) pour la paroi interne (32) du logement cellulaire du côté de la cathode se transforme en un prolongement (47) dont le diamètre est inférieur à la dimension en coupe transversale de la cathode (5) ou encore de la ou des tôles en métal déployé (4), si bien que l'on obtient une section d'espace libre pour la cathode en position latérale à la cathode (5) et/ou de la ou des tôles en métal déployé (4).

36. Utilisation de la cellule d'électrolyse selon les revendications 1 à 35, à titre de cellule d'immersion pour le traitement d'eaux industrielles et d'eaux usées et d'autres liquides oxydables industriels, dont la conductance est supérieure à 20 µS/cm, en y introduisant directement de l'ozone.
